# EUROPEAN PATENT APPLICATION

(11) **EP 4 093 107 A1**
(43) Date of publication of application: **23.11.2022**
(21) Application number: 21741600.7
(22) Date of filing: 24.02.2021
(51) Int. Cl.: H04W 60/00, H04W 60/04, H04W 4/16

(54) **MULTIMEDIA SERVICE PROCESSING METHOD, STORAGE MEDIUM, CHIP, AND RELATED DEVICE**

(30) Priority: 16.01.2020 CN 202010049233
(71) Applicant: Spreadtrum Communications (Shanghai) Co., Ltd., Shanghai 201203 (CN)
(72) Inventor: XI, Jun, Shanghai 201203 (CN); CAI, Yuting, Shanghai 201203 (CN)
(74) Representative: Mewburn Ellis LLP
(86) International application number: PCT/CN2021/077600
(87) International publication number: WO 2021/143941

(57) **Abstract**

A method for processing a multimedia service, a storage medium, a chip, and a related device are provided in embodiments of the disclosure. The method is applicable to a user equipment (UE). The method includes: transmitting a tracking area update (TAU) request, upon detecting that the UE initiates a voice over long term evolution (VoLTE) call request before a first timer expires; and establishing a VoLTE service link for the UE, upon detecting that a TAU is successful. By adopting the disclosure, the VoLTE service link for the UE can be quickly established, and the probability that a VoLTE video service falls back to a circuit switched (CS) voice service can be reduced.

## Description

### TECHNICAL FIELD

This disclosure relates to technical field of communication, in particular to a method for processing a multimedia service, a storage medium, a chip, and a related device.

### BACKGROUND

As demands of users on high-quality audio and video calls gradually increase, more and more users choose to use voice over long term evolution (VoLTE). To ensure that various long term evolution (LTE) services for a user equipment (UE) can be performed normally, a tracking area update (TAU) needs to be performed. During the TAU, the UE initiates a VoLTE service, and needs to wait for success of the TAU before establishing the VoLTE service. How to quickly establish a VoLTE service link for the UE has become a hot research issue.

### SUMMARY

Embodiments of the disclosure provide a method for processing a multimedia service, a storage medium, a chip, and a related device, which can quickly establish a voice over long term evolution (VoLTE) service link for a user equipment (UE), and reduce a probability of a VoLTE video service falling back to a circuit switched (CS) voice service.

To solve the above technical problem, embodiments of the disclosure provide a method for processing a multimedia service. The method is applicable to a UE.

The method includes: transmitting a tracking area update (TAU) request immediately, upon detecting that the UE initiates a VoLTE call request before a first timer expires; and establishing a VoLTE service link for the UE, upon detecting that a TAU is successful.

Accordingly, embodiments of the disclosure further provide a smart terminal. The smart terminal includes a storing device and a processor.

The storing device is configured to store program instructions. The processor is configured to invoke the program instructions to: transmit a TAU request immediately, upon detecting that a UE initiates a VoLTE call request before a first timer expires, and establish a VoLTE service link for the UE, upon detecting that a TAU is successful.

Accordingly, embodiments of the disclosure further provide a device for processing a multimedia service. The device includes: a transmitting module configured to: transmit a TAU request immediately, upon detecting that a UE initiates a VoLTE call request before a first timer expires; and an establishing module configured to: establish a VoLTE service link for the UE, upon detecting that a TAU is successful.

Accordingly, embodiments of the disclosure further provide a computer-readable storage medium. The computer-readable storage medium is for storing a computer program. The computer program causes a computer to execute the above method for processing a multimedia service.

Accordingly, embodiments of the disclosure provide a chip. The chip is configured to: output a TAU request to transmit the TAU request, upon detecting that a UE initiates a VoLTE call request before a first timer expires, and establish a VoLTE service link for the UE, upon detecting that a TAU is successful.

Accordingly, embodiments of the disclosure provide a module device. The module device includes a communication module and a chip module.

The chip module is configured to output a TAU request, upon detecting that a UE initiates a VoLTE call request before a first timer expires. The communication module is configured to transmit the TAU request. The chip module is further configured to establish a VoLTE service link for the UE, upon detecting that a TAU is successful.

The following advantageous effect can be achieved by implementing embodiments of the disclosure.

While waiting for re-triggering the TAU, if the UE initiates the VoLTE call request, the TAU is triggered immediately, and the synchronization between the UE and the network is quickly completed. Thus, the VoLTE service link for the UE can be quickly established, and the probability that the VoLTE video service falls back to the CS voice service can be reduced.

### BRIEF DESCRIPTION OF THE DRAWINGS

To illustrate technical solutions in embodiments of the disclosure more clearly, the following briefly introduces accompanying drawings used in the description of the embodiments. Apparently, the drawings in the following description are merely some embodiments of the disclosure. For those of ordinary skill in the art, other drawings can also be obtained from these drawings without creative effort.
FIG. 1a is a scenario diagram of establishing a voice over long term evolution (VoLTE) service link provided in embodiments of the disclosure.
FIG. 1b is a schematic flowchart of a method for processing a multimedia service provided in embodiments of the disclosure.
FIG. 2 is a schematic flowchart of another method for processing a multimedia service provided in embodiments of the disclosure.
FIG. 3 is a system architecture diagram of a tracking area update (TAU) provided in embodiments of the disclosure.
FIG. 4 is a schematic flowchart of another method for processing a multimedia service provided in embodiments of the disclosure.
FIG. 5 is a schematic structural diagram of a smart terminal provided in embodiments of the disclosure.
FIG. 6 is a schematic structural diagram of a device for processing a multimedia service provided in embodiments of the disclosure.
FIG. 7 is a schematic structural diagram of a module device provided in embodiments of the disclosure.

### DETAILED DESCRIPTION

In embodiments of the disclosure, voice over long term evolution (VoLTE) is a standard long term evolution (LTE) voice solution defined by the global system for mobile communications association (GSMA), which means that a user equipment (UE) accesses an evolved packet core (EPC) through LTE and then an IP multimedia subsystem (IMS) provides users with high-quality voice or video services. It should be noted that, the UE in embodiments of the disclosure includes, but is not limited to, a smart phone, a tablet computer, a media player, a smart TV, a smart bracelet, a smart wearable device, a personal digital assistant (PDA), and a mobile Internet device (MID), and the like.

In the LTE system, to facilitate management of a location of the UE, the concept of tracking area (TA) is proposed. The TA is defined as a free movement area where the UE does not need to update the service. Therefore, when the UE moves from one TA to another TA, the location must be registered again on the new TA, to inform the network to change the stored location information of the UE. This process is called tracking area update (TAU). The TAU includes: a periodic TAU configured by the network, or a TAU initiated by the UE according to requirement on mobility management entity (MME) load balancing, or the UE entering the evolved universal mobile telecommunications system-terrestrial radio access network (EUTRAN) from the universal mobile telecommunications system-terrestrial radio access network (UTRAN) through re-selection, etc. It can be understood that, the TAU can be initiated based on actual needs, and the method for initiating the TAU is not limited herein. During the TAU of the UE, many network elements are involved, such as: evolved base station (e-Node, eNB), MME, serving gateway (SGW), home subscriber server (HSS), and home location register (HLR).

During the TAU of the UE, if the UE initiates a VoLTE call request, the UE needs to wait for success of the TAU, to achieve synchronization of registration information between the UE and the network, and then the UE can transmit an INVITE message to the IMS to request establishment of a VoLTE service link for the UE. The registration information at least includes the TA information of the UE, and the registration information may also include a globally unique temporary identity (GUTI) allocated to the UE by the network device and a request of establishing user plane resources for the UE, etc. It can be understood that, the contents of the registration information can be adjusted based on actual needs, which is not limited herein. At present, if the UE fails the last TAU, a first timer will start; during running of the first timer, although the UE is in the state of attempting to register and update the location of the tracking area, it suspends transmitting the TAU request; after the first timer expires, the UE retransmits the TAU request, to perform TAU; only after the TAU is successful, the UE can transmit the INVITE message to the IMS to request establishment of the VoLTE service link for the UE. That is, the baseband chip of the UE will preferentially wait for the first timer to expire before performing TAU, and delay the transmission of the IMS signaling of the VoLTE call request. As such, the delay in establishing the VoLTE service link for the UE becomes longer, or the VoLTE service is changed into a voice service in the circuit switched domain. There are many reasons for the TAU failure of the UE, such as lower layer failure, third timer timeout, TAU rejection caused by evolved packet system-mobility management (EPS-mobility management, EMM). The first timer is used for timing the waiting time from failing of the TAU to re-initiating of the TAU request, where the first timer may be T3411 timer and the standard duration of the first timer may be 10 s. The third timer is used for timing the TAU, and the third timer may be T3430 timer. The first timer and its standard duration and the third timer and its standard duration may be defined by the protocol. It should be noted that, when the actual timing of the first timer reaches the standard duration of the first timer, the first timer stops; when the actual timing of the third timer reaches the standard duration of the third timer, the third timer stops.

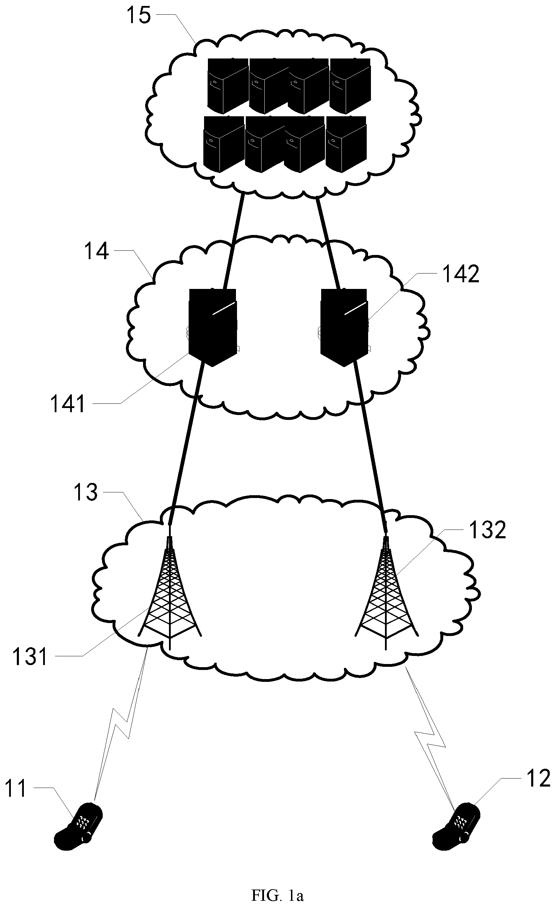

Referring to FIG. 1a, FIG. 1a is a scenario diagram of establishing a VoLTE service link provided in embodiments of the disclosure. As shown in FIG. 1a, in this scenario, UE 11 initiates a request to establish a VoLTE call request for VoLTE video or voice call with UE 12. Then, UE 11 transmits an INVITE message to IMS 15 through LTE 13 and EPC 14, to request IMS 15 to establish a VoLTE service link for UE 11, that is, a VoLTE service link between UE 11 and UE 12. IMS 15 makes an addressed call to UE 12 through EPC 14 and LTE 13, and then UE 12 rings. When UE 12 goes off-hook, the VoLTE service link between UE 11 and UE 12 is successfully established. After receiving the INVITE message, IMS 15 transmits a response message to UE 11 through EPC 14 and LTE 13, informing UE 11 that IMS 15 has received the INVITE message, and establishment of the VoLTE service link between UE 11 and UE 12 can be started. Specifically, UE 11 communicates with the IMS through eNB 131 in LTE 13 and the public data network-gateway (PGW) 141 in EPC 14; UE 12 communicates with the IMS through eNB 132 in LTE 13 and the PGW 142 in EPC 14.

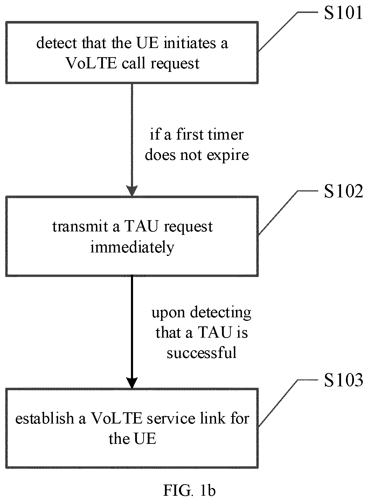

Referring to FIG. 1b, FIG. 1b is a schematic flowchart of a method for processing a multimedia service provided in embodiments of the disclosure. As specifically shown in FIG. 1b, the method is applicable to a user equipment and includes the following.

S101, detect that the UE initiates a VoLTE call request. The VoLTE call request requests to establish a VoLTE service link for the UE, that is, establish the VoLTE service link between the UE and another UE, and the VoLTE service includes VoLTE voice service and VoLTE video service.

If a first timer does not expire, perform S102. The fact that the first timer does not expire means that the current timing of the first timer does not exceed the standard duration of the first timer. The first timer and the standard duration of the first timer may be defined by a protocol. For example, the first timer may be T3411 timer, and the standard duration of the first timer may be 10 s. While the first timer is running, the UE is in a state of attempting to register and update the location of the tracking area, that is, an attempting-to-update state. The state of attempting to register and update the location of the tracking area refers to a state that the UE waits for the next TAU after the last TAU failure, that is, a state that the UE waits to retransmit the tracking area update request after the last TAU failure. The last TAU refers to the most recently executed TAU. The maximum number of attempts of the TAU may be defined by the protocol. For example, if the maximum number of attempts of the TAU is 5, the TAU can attempt to execute 5 times at most. The state of attempting to register and update the location of the tracking area may be defined by the protocol.

S102, transmit the TAU request immediately. Specifically, the UE triggers to stop the first timer and immediately transmits the TAU request.

The tracking area update request requests the network device to update the registration information of the UE, to achieve quick synchronization of the registration information of the UE between the network device and the UE. Thus, the VoLTE service for the UE can be quickly established, and the probability that the VoLTE video service falls back to the CS voice service can be reduced. The registration information at least includes location information of the TA of the UE. The registration information may also include a GUTI allocated to the UE by the network device and a request of establishing user plane resources for the UE, etc. It can be understood that, the contents of the registration information can be adjusted based on actual needs, which is not limited herein. After it is detected that the TAU is successful, perform S103.

S103, establish a VoLTE service link for the UE.

It should be noted that, for the implementation of the method described in FIG. 1b, reference may be made to the description of the subsequent embodiments.

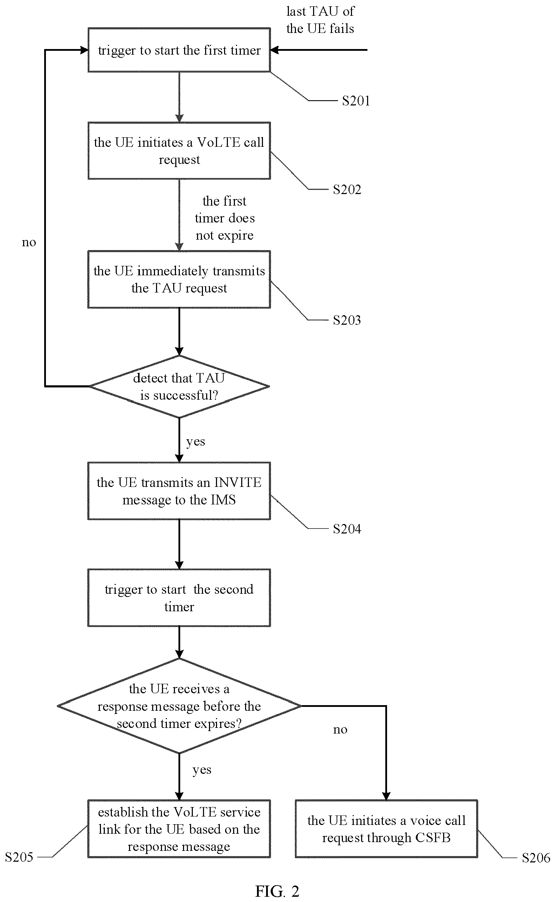

Referring to FIG. 2, FIG. 2 is a schematic flowchart of another method for processing a multimedia service provided in embodiments of the disclosure. The present specification provides method operations as described in the embodiments or flow charts, but more or few operations may be included based on routine or non-creative work. The sequence of operations enumerated in the embodiments is merely one of many execution sequences of the operations, and does not represent the only execution sequence. In practice, when a terminal or storage medium product is executed, the methods shown in the embodiments or the accompanying drawings may be executed in sequence or in parallel. Specifically, as shown in FIG. 2, the method includes the following.

If a last TAU of the UE fails, perform S201. The last TAU refers to the most recently executed TAU. The maximum number of attempts of the TAU may be defined by the protocol. For example, if the maximum number of attempts of the TAU is 5, the TAU can attempt to execute 5 times at most.

S201, trigger to start the first timer.

In embodiments of the disclosure, the procedure of TAU of the UE includes the following. The UE transmits the TAU request to the network device, and the network device updates the registration information of the UE stored in the network device based on the TAU request. The registration information at least includes location information of the TA of the UE. The registration information may also include a GUTI allocated to the UE by the network device and a request of establishing user plane resources for the UE, etc. It can be understood that, the contents of the registration information can be adjusted based on actual needs, which is not limited herein. The TAU request may be transmitted by the non-access stratum (NAS) of LTE for the UE.

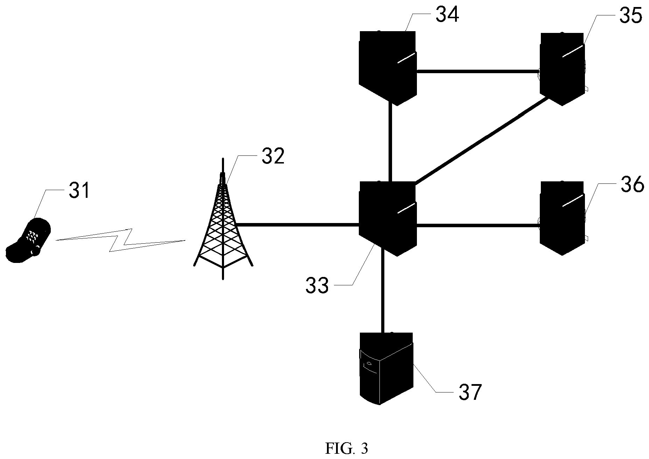

Referring to FIG. 3, FIG. 3 is a system architecture diagram of a TAU provided in embodiments of the disclosure. As shown in FIG. 3, the TAU of the UE includes the following. UE 31 transparently transmits the TAU request to destination MME 33 through eNB 32. Destination MME 33 obtains context information of UE 31 from original MME 34 based on the TAU request, where destination MME 33 refers to the MME to which UE 31 currently belongs, and original MME 34 refers to the MME to which UE 31 belongs before TAU of UE 31. Next, if destination MME 33 determines that the SGW does not change, it transmits a bearer update request to original SGW 35 to instruct original SGW 35 to update context information of bearers of UE 31 and original MME 34 of UE 31. If destination MME 33 determines that the SGW has changed, it transmits a create session request to new SGW 36 to establish a session between destination MME 33 and new SGW 36. Then, destination MME 33 transmits a location update request to HSS 37 to instruct HSS 37 to update the registration information of UE 31 and instruct HSS 37 to notify original MME 34 to delete the registration information of UE 31. Finally, destination MME 33 interacts with UE 31, so that TAU of UE 31 succeeds. That is, destination MME 33 transmits a feedback message to UE 31 through eNB 32, where the feedback message indicates that the TAU is successful.

If the UE fails the last TAU, the first timer will be triggered to start timing; during the timing of the first timer, although the UE is in the state of attempting to register and update the location of the tracking area, it suspends transmitting the TAU request; after the first timer expires, the UE retransmits the TAU request, for performing the TAU again. The fact that the first timer expires means that the current timing of the first timer exceeds the standard duration of the first timer. The first timer is used for timing the waiting time before re-initiating the TAU request after the last TAU fails. The first timer and the standard duration of the first timer may be defined by a protocol. For example, the first timer may be T3411 timer, and the standard duration of the first timer may be 10 s.

S202, the UE initiates a VoLTE call request. The VoLTE call request requests to establish a VoLTE service link for the UE, that is, establish the VoLTE service link between the UE and another UE, and the VoLTE service includes VoLTE voice service and VoLTE video service.

If the first timer does not expire, which means that the UE is in the state of attempting to register and update the location of the tracking area, perform S203. The method further includes: performing S203 if the first timer expires. The fact that the first timer does not expire means that the timing of the first timer does not exceed the standard duration of the first timer. The state of attempting to register and update the location of the tracking area refers to a state that the UE waits for the next TAU after the last TAU failure, that is, a state that the UE waits to retransmit the tracking area update request after the last TAU failure. The state of attempting to register and update the location of the tracking area can be defined by the protocol.

S203, the UE immediately transmits the TAU request. Specifically, the UE triggers to stop the first timer and transmits the TAU request immediately. The TAU request requests the network device to update the registration information of the UE.

If the first timer does not expire, the first timer stops and the UE transmits the tracking area update request immediately. This can avoid waiting for the first timer to expire before transmitting the tracking area update request, which may cause delay in establishing the VoLTE service link for the UE or cause the VoLTE video service to fall back to the CS voice service, bringing a bad experience to the user. As such, synchronization of the registration information between the UE and the network device can be achieved quickly, thereby quickly establishing the VoLTE service link for the UE.

After the UE detects that the tracking area update succeeds, S204 is performed; if the UE detects that the tracking area update fails, S201 is performed. Before S204 is performed, it is also necessary to determine whether the number of attempts of the TAU exceeds the maximum number of attempts of the TAU, and if not, S204 is performed.

At S204, the UE transmits an INVITE message to the IMS. The INVITE message requests the IMS to establish the VoLTE service link for the UE. The INVITE message can be specifically used for requesting to register the UE to the IMS so that the IMS provides the UE with high-quality voice or video services, and used for requesting to make calls with other UEs.

The detecting that the TAU is successful may be that the UE receives a feedback message transmitted by the network device, where the feedback message indicates that the TAU is successful.

In embodiments of the disclosure, when the INVITE message is transmitted to the IMS, the second timer starts. The second timer is used to enable the VOLTE call to support the silent redial mechanism, and to provide protection timing for the VOLTE call. The second timer and the standard duration of the second timer may be defined by the silent redial mechanism. For example, the second timer is Tcall timer, and the standard duration of the second timer is 6 s. It should be noted that, when the actual timing of the second timer reaches the standard duration of the second timer, the first timer stops.

If the second timer does not expire and the UE receives the response message, that is, the UE receives the response message before the second timer expires, S205 is performed. If the second timer expires and the UE receives no response message, that is, the UE receives no response message before the second timer expires, S206 is performed. The fact that the second timer does not expire means that the current timing of the second timer does not exceed the standard duration of the second timer. The fact the second timer expires means that the current timing of the second timer exceeds the standard duration of the second timer. The response message is transmitted by the IMS, and the response message indicates that the INVITE message is received by the IMS. The response message may be a 100 Trying message transmitted by the server in the IMS, and the IMS transmits the response message to the UE through EPC and LTE sequentially.

S205, establish the VoLTE service link for the UE based on the response message.

S206, the UE initiates a voice call request through circuit switched fallback (CSFB).

The voice call request requests to establish a voice service for the UE in a circuit switched domain. The UE establishes the voice service through CSFB, and maintains the state of the IMS.

In embodiments of the disclosure, while waiting for re-triggering the tracking area update, if the UE initiates the VoLTE call request, the tracking area update is triggered immediately, and the synchronization between the UE and the network is quickly completed. Thus, the VoLTE service link for the UE can be quickly established, and the probability that the VoLTE video service falls back to the CS voice service can be reduced.

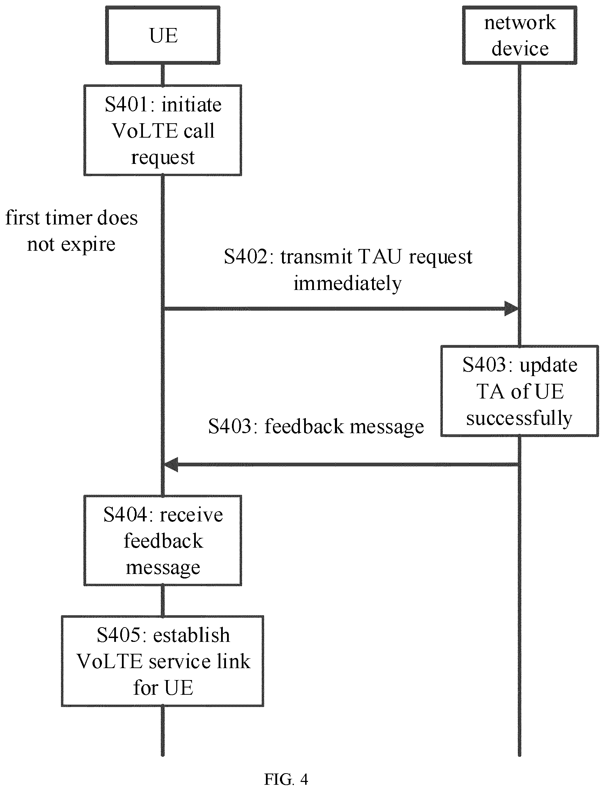

Referring to FIG. 4, FIG. 4 is a schematic flowchart of another method for processing a multimedia service provided in embodiments of the disclosure. As specifically shown in FIG. 4, the method includes the following.

S401, the UE initiates a VoLTE call request, where the VoLTE call request requests establishment of a VoLTE service link for the UE.

If the first timer has not timed out, S402 is executed. The fact that the first timer has not timed out means that the current timing of the first timer does not exceed the standard duration of the first timer. The first timer and the standard duration of the first timer may be specified by the protocol. For example, the first timer is T3411 timer, and the standard duration of the first timer may be 10 s.

S402, the UE immediately transmits a tracking area update request to the network device. Specifically, the UE triggers to stop the first timer and the UE immediately transmits the tracking area update request to the network device.

The tracking area update request requests the network device to update the registration information of the UE. The registration information at least includes location information of the TA of the UE, and the registration information may also include a GUTI allocated to the UE by the network device and a request of establishing user plane resources for the UE, etc. It can be understood that, the contents of the registration information can be adjusted based on actual needs, which is not limited herein.

S403, if the network device successfully updates the TA of the UE, it transmits a feedback message to the UE. The feedback message indicates that the TAU is successful.

S404, the UE receives the feedback message. That is, the UE detects that the TAU is successful.

S405, the UE establishes the VoLTE service link for the UE.

In embodiments of the disclosure, while waiting for re-triggering the tracking area update, if the UE initiates the VoLTE call request, the tracking area update is triggered immediately, and the synchronization between the UE and the network is quickly completed. Thus, the VoLTE service link for the UE can be quickly established, and the probability that the VoLTE video service falls back to the CS voice service can be reduced.

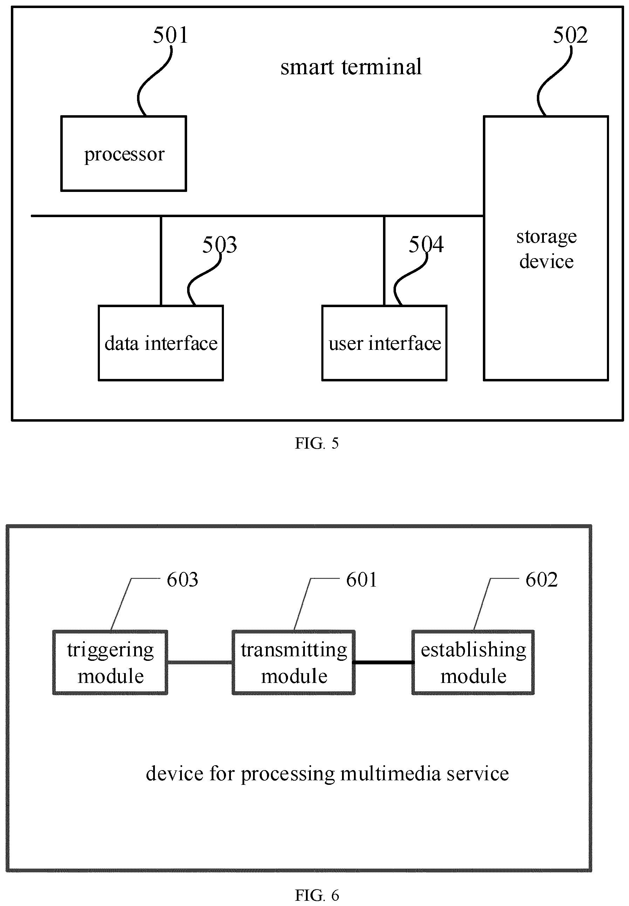

Referring to FIG. 5, FIG. 5 is a schematic structural diagram of a smart terminal provided in embodiments of the disclosure. The smart terminal may be a terminal such as a smartphone, a tablet computer, or a personal computer (PC). The smart terminal includes: a storage device 502 and a processor 501. In addition, the smart terminal may further include a data interface 503 and a user interface 504. Various types of buses can also be used to establish connections between various hardware.

Through the data interface 503, the smart terminal can exchange data with other terminals, servers, and other devices, and the user interface 504 can provide a touch screen, physical buttons, etc. to achieve human-computer interaction between the user and the smart terminal.

The storage device 502 may include a volatile memory, such as random-access memory (RAM). The storage device 502 may also include a non-volatile memory, such as flash memory, solid-state drive (SSD), and the like. The storage device 502 may also include a combination of the above memories.

The processor 501 may be a central processing unit (CPU). The processor 501 may further include a hardware chip. The above-mentioned hardware chip may be an application-specific integrated circuit (ASIC), a programmable logic device (PLD), or the like. The above PLD can be field-programmable gate array (FPGA), generic array logic (GAL), etc.

Optionally, the storing device is configured to store program instructions. The processor 501 is configured to invoke the program instructions to implement related operations of the method shown in the above embodiments of the disclosure.

In an embodiment, the processor 501 is configured to invoke the program instructions to: transmit a TAU request immediately, upon detecting that a UE initiates a VoLTE call request before a first timer expires, and establish a VoLTE service link for the UE, upon detecting that a TAU is successful.

In an embodiment, the processor 501 is further configured to: trigger to start the first timer, upon detecting that a last TAU fails.

In an embodiment, the processor 501 is further configured to: transmit an INVITE message to an IMS, upon detecting that the TAU is successful, where the INVITE message requests the IMS to establish the VoLTE service link for the UE.

In an embodiment, the processor 501 is further configured to: trigger to start a second timer when transmitting the INVITE message to the IMS.

In an embodiment, the processor 501 is configured to: establish the VoLTE service link for the UE based on a response message, if the response message is received by the UE before the second timer expires, where the response message is transmitted by the IMS and indicates that the INVITE message is received by the IMS.

In an embodiment, the processor 501 is further configured to: initiate a voice call request through CSFB, if no response message is received by the UE before the second timer expires, where the voice call request requests to establish a voice service for the UE in a circuit switched domain, and the response message is transmitted by the IMS and indicates that the INVITE message is received by the IMS.

Referring to FIG. 6, which is a schematic structural diagram of a device for processing a multimedia service provided in embodiments of the disclosure. The device can be set in a smart terminal. The device may be a computer program (including program code) running in the smart terminal, or may be a physical device included in the smart terminal. The device can execute the method shown in any of the embodiments in FIG. 1 b, FIG. 2, and FIG. 4 of the disclosure. Referring specifically to FIG. 6, the device includes a transmitting module 601 and an establishing module 602.

The transmitting module 601 is configured to: transmit a TAU request immediately, upon detecting that a UE initiates a VoLTE call request before a first timer expires.

The establishing module 602 is configured to: establish a VoLTE service link for the UE, upon detecting that a TAU is successful.

In an embodiment, the device further includes a triggering module 603. The triggering module 603 is configured to: trigger to start the first timer, upon detecting that a last TAU fails.

In an embodiment, the establishing module 602 is further configured to: transmit an INVITE message to an IMS, upon detecting that the TAU is successful, where the INVITE message requests the IMS to establish the VoLTE service link for the UE.

In an embodiment, the triggering module 603 is further configured to: trigger to start a second timer when transmitting the INVITE message to the IMS.

In an embodiment, the establishing module 602 is configured to: establish the VoLTE service link for the UE based on a response message, if the response message is received by the UE before the second timer expires, where the response message is transmitted by the IMS and indicates that the INVITE message is received by the IMS.

In an embodiment, the establishing module 602 is further configured to: initiate a voice call request through CSFB, if no response message is received by the UE before the second timer expires, where the voice call request requests to establish a voice service for the UE in a circuit switched domain, and the response message is transmitted by the IMS and indicates that the INVITE message is received by the IMS.

Accordingly, embodiments of the disclosure further provide a computer-readable storage medium. The computer-readable storage medium is used to store a computer program, and the computer program causes the computer to execute the method shown in any of the embodiments in FIG. 1 b, FIG. 2 and FIG. 4 of the disclosure. It can be understood that, the computer storage medium here may include the built-in storage medium in the smart terminal, and also the extended storage medium supported by the smart terminal. The computer storage medium provides storage space, and the storage space stores the operating system of the smart terminal. In addition, one or more instructions suitable for being loaded and executed by the processor are also stored in the storage space, and these instructions may be one or more computer programs (including program codes). It should be noted that, the computer storage medium herein may be a high-speed RAM, or a non-volatile memory, such as at least one disk memory. Optionally, the computer storage medium can also be at least one computer storage medium located remotely from the above processor.

Those of ordinary skill in the art can understand that, all or part of procedures in the above method embodiments can be implemented by instructing relevant hardware through a computer program. The program can be stored in a computer-readable storage medium, and when the program is executed, the program can include the procedures of the above method embodiments. The storage medium may be a magnetic disk, an optical disk, a ROM or a RAM, and the like.

Accordingly, embodiments of the disclosure provide a chip. The chip is configured to: output a TAU request to transmit the TAU request, upon detecting that a UE initiates a VoLTE call request before a first timer expires, and establish a VoLTE service link for the UE, upon detecting that a TAU is successful.

In an embodiment, the chip is further configured to: trigger to start the first timer, upon detecting that a last TAU fails, before transmitting the TAU request, upon detecting that the UE initiates the VoLTE call request before a first timer expires.

In an embodiment, the chip is further configured to: output an INVITE message to transmit the INVITE message to an IMS, upon detecting that the TAU is successful, where the INVITE message requests the IMS to establish the VoLTE service link for the UE.

In an embodiment, the chip is further configured to: trigger to start a second timer when outputting the INVITE message to the IMS.

In an embodiment, the chip is configured to: establish the VoLTE service link for the UE based on a response message, if the response message is received by the UE before the second timer expires, where the response message is transmitted by the IMS and indicates that the INVITE message is received by the IMS.

In an embodiment, the chip is further configured to: initiate a voice call request through CSFB, if no response message is received by the UE before the second timer expires, where the voice call request requests to establish a voice service for the UE in a circuit switched domain, and the response message is transmitted by the IMS and indicates that the INVITE message is received by the IMS.

In one embodiment, the chip described above includes at least one processor, at least one first memory, and at least one second memory. The at least one first memory and the at least one processor are interconnected through wires. The first memory stores instructions. The at least one second memory and the at least one processor are interconnected through wires. The second memory stores data needs to be stored of any of the embodiments in FIG. 1 b, FIG. 2, and FIG. 4.

For each device or product that is applied to or integrated in the chip, various modules included in the device or product can be implemented by hardware such as circuits; alternatively, at least some modules may be implemented by a software program, where the software program runs on a processor integrated in the chip, and the remaining (if any) modules can be implemented by hardware such as circuits.

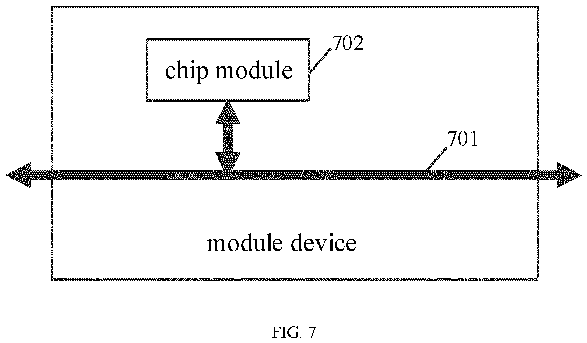

Referring to FIG. 7, FIG. 7 is a schematic structural diagram of a module device provided in embodiments of the disclosure. The module device includes a communication module 701 and a chip module 702.

The chip module 702 is configured to output a TAU request, upon detecting that a UE initiates a VoLTE call request before a first timer expires. The communication module 701 is configured to transmit the TAU request. The chip module 702 is further configured to establish a VoLTE service link for the UE, upon detecting that a TAU is successful.

In an embodiment, the chip module 702 is further configured to: trigger to start the first timer, upon detecting that a last TAU fails, before transmitting the TAU request, upon detecting that the UE initiates the VoLTE call request before a first timer expires.

In an embodiment, the chip module 702 is further configured to: output an INVITE message, upon detecting that the TAU is successful. The communication module 701 is further configured to transmit the INVITE message to an IMS, where the INVITE message requests the IMS to establish the VoLTE service link for the UE.

In an embodiment, the chip module 702 is further configured to: trigger to start a second timer when outputting the INVITE message to the IMS.

In an embodiment, the chip module 702 is configured to: establish the VoLTE service link for the UE based on a response message, if the response message is received by the UE before the second timer expires, where the response message is transmitted by the IMS and indicates that the INVITE message is received by the IMS.

In an embodiment, the chip module 702 is further configured to: initiate a voice call request through CSFB, if no response message is received by the UE before the second timer expires, where the voice call request requests to establish a voice service for the UE in a circuit switched domain, and the response message is transmitted by the IMS and indicates that the INVITE message is received by the IMS.

It should be noted that, the module device can execute the method described in any of the embodiments in FIG. 1 b, FIG. 2, and FIG. 4. For details, reference may be made to the implementations provided in the above operations, and details are not described herein again.

For each device or product that is applied to or integrated in the chip module 702, various modules included in the device or product can be implemented by hardware such as circuits, where different modules may be located in the same component (e.g., chip, circuit module, etc.) or in different components of the chip module 702; alternatively, at least some modules may be implemented by a software program, where the software program runs on a processor integrated in the chip module 702, and the remaining (if any) modules can be implemented by hardware such as circuits.

The embodiments disclosed above are merely part of the embodiments of the disclosure, and cannot be used to limit the scope of the disclosure. Those of ordinary skill in the art can understand that, all or part of procedures of the above embodiments and the equivalent changes made based on the claims of the disclosure still belong to the scope covered by the disclosure.

## Claims

1. A method for processing a multimedia service, applicable to a user equipment (UE) and comprising:
transmitting a tracking area update (TAU) request, upon detecting that the UE initiates a voice over long term evolution (VoLTE) call request before a first timer expires; and
establishing a VoLTE service link for the UE, upon detecting that a TAU is successful.

2. The method of claim 1, wherein prior to: transmitting the TAU request, upon detecting that the UE initiates the VoLTE call request before the first timer expires, the method further comprises:
triggering to start the first timer, upon detecting that a last TAU fails.

3. The method of claim 1 or 2, wherein subsequent to detecting that the TAU is successful, the method further comprises:
transmitting an INVITE message to an IP multimedia subsystem (IMS), wherein the INVITE message requests the IMS to establish the VoLTE service link for the UE.

4. The method of claim 3, further comprising:
triggering to start a second timer when transmitting the INVITE message to the IMS.

5. The method of claim 4, wherein establishing the VoLTE service link for the UE comprises:
establishing the VoLTE service link for the UE based on a response message, if the response message is received by the UE before the second timer expires, wherein
the response message is transmitted by the IMS and indicates that the INVITE message is received by the IMS.

6. The method of claim 4, further comprising:
initiating a voice call request through circuit switched fallback (CSFB), if no response message is received by the UE before the second timer expires, wherein
the voice call request requests to establish a voice service for the UE in a circuit switched domain, and the response message is transmitted by the IMS and indicates that the INVITE message is received by the IMS.

7. A smart terminal, comprising:
a storing device configured to store program instructions; and
a processor configured to invoke the program instructions to: transmit a tracking area update (TAU) request, upon detecting that a user equipment (UE) initiates a voice over long term evolution (VoLTE) call request before a first timer expires, and establish a VoLTE service link for the UE, upon detecting that a TAU is successful.

8. The smart terminal of claim 7, wherein the processor is further configured to: trigger to start the first timer, upon detecting that a last TAU fails.

9. The smart terminal of claim 7 or 8, wherein the processor is further configured to: transmit an INVITE message to an IP multimedia subsystem (IMS), upon detecting that the TAU is successful, wherein the INVITE message requests the IMS to establish the VoLTE service link for the UE.

10. The smart terminal of claim 9, wherein the processor is further configured to: trigger to start a second timer when transmitting the INVITE message to the IMS.

11. The smart terminal of claim 10, wherein the processor is configured to: establish the VoLTE service link for the UE based on a response message, if the response message is received by the UE before the second timer expires, wherein
the response message is transmitted by the IMS and indicates that the INVITE message is received by the IMS.

12. The smart terminal of claim 10, wherein the processor is further configured to: initiate a voice call request through circuit switched fallback (CSFB), if no response message is received by the UE before the second timer expires, wherein
the voice call request requests to establish a voice service for the UE in a circuit switched domain, and the response message is transmitted by the IMS and indicates that the INVITE message is received by the IMS.

13. A device for processing a multimedia service, comprising:
a transmitting module configured to: transmit a tracking area update (TAU) request, upon detecting that a user equipment (UE) initiates a voice over long term evolution (VoLTE) call request before a first timer expires; and
an establishing module configured to: establish a VoLTE service link for the UE, upon detecting that a TAU is successful.

14. A computer-readable storage medium for storing a computer program, wherein the computer program causes a computer to execute the method of any of claims 1-6.

15. A chip, configured to: output a tracking area update (TAU) request to transmit the TAU request, upon detecting that a user equipment (UE) initiates a voice over long term evolution (VoLTE) call request before a first timer expires, and establish a VoLTE service link for the UE, upon detecting that a TAU is successful.

16. A module device comprising a communication module and a chip module, wherein
the chip module is configured to output a tracking area update (TAU) request, upon detecting that a user equipment (UE) initiates a voice over long term evolution (VoLTE) call request before a first timer expires;
the communication module is configured to transmit the TAU request; and
the chip module is further configured to establish a VoLTE service link for the UE, upon detecting that a TAU is successful.
